# EUROPEAN PATENT SPECIFICATION

(11) **EP 0 607 690 B1**
(45) Date of publication and mention of the grant of the patent: **19.02.1997**
(21) Application number: 93310322.8
(22) Date of filing: 20.12.1993
(51) Int. Cl.: B60C 23/06

(54) **Method and device for detecting pneumatic abnormalities of tyre**
Verfahren und Vorrichtung zum Erkennen von Reifenfehlern
Procédé et dispositif de détection d'anomalies de gonflage pour pneumatiques

(30) Priority: 21.12.1992 JP 340000/92; 24.12.1992 JP 344104/92
(43) Date of publication of application: 27.07.1994
(73) Proprietor: Sumitomo Rubber Industries Ltd., Kobe-shi, Hyogo-ken (JP)
(72) Inventor: Kishimoto, Yoshikazu, Kakogawa Green City D302, Kakogawa-shi, Hyogo-ken (JP); Yanase, Minao, Nishi-ku, Kobeshi, Hyogo-ken (JP)
(74) Representative: Stewart, Charles Geoffrey

(56) References cited:
- EP-A- 0 291 217
- EP-A- 0 552 827
- EP-A- 0 554 131
- FR-A- 2 271 063

## Description

The present invention relates to a method and a device for detecting pneumatic abnormalities of tyres on a vehicle such as a car or a truck. More particularly, the invention relates to a method and a device capable of reducing cost by the use of wheel speed pulses in the ABS (Anti-Lock Braking System) and of detecting simply and reliably simultaneous abnormality of not less than two tyres at minimum increase of cost. Such a device is disclosed in EP-A-0 291 217.

The pneumatic pressure of tyres greatly influences the performance of vehicles especially deflation of tyres which has a close relation to safety for drivers. Hence, many systems for detecting pneumatic abnormalities of a tyre have been proposed. However, these proposals could not realise both high reliability and low cost so that they have not been widely used. Recently, with the spread of ABS, there has been proposed a system with low cost and high reliability wherein the wheel speed pulses in the ABS are utilised. Although the system is reliable in detecting abnormality of one tyre, it is not reliable to detect simultaneous abnormality of two or more tyres.

In the meanwhile, devices for detecting pneumatic abnormalities are classified into several types according to detection methods. One type detects directly the pneumatic pressure of tyres and another type detects a physical quantity such as the deflection or number of revolutions which change with pneumatic pressure.

The former type can measure the pressure but the device is complicated and expensive because the transmission of signals from a rotating body to the static vehicle body is difficult. On the other hand, the latter is simple and cheap but it is less sensitive than the former.

Also, in systems for detecting pneumatic abnormalities on the basis of wheel speed, abnormalities of a tyre are generally determined by comparison between the wheel speed pulse of the abnormal pneumatic tyre and that of one or more normal pneumatic tyres. Accordingly, the pneumatic pressure of at least one tyre must be normal, so that theoretically the simultaneous abnormality of four wheel cannot be detected.

In view of the above state of the art, it is an object of the present invention to provide a method and a device for detecting pneumatic abnormalities of tyre of low cost, which is of high reliability and which can detect simultaneous abnormalities of four wheels on a vehicle.

According to the present invention, there is provided a method for detecting pneumatic abnormalities of tyres on a vehicle, the method comprising the steps of:
(a) detecting the angular velocity of each wheel,
(b) producing signals proportional to the detected angular velocities,
(c) detecting accelerations of the vehicle in a forward or backward direction,
(d) obtaining a speed in the forward or backward direction by integrating the detected accelerations,
(e) producing a signal proportional to the obtained speed in the forward or backward direction, and
(f) arithmetically processing the signals produced in the steps (b) and (e)
wherein the step (f) comprises obtaining, from a previously prepared table of wheel angular velocities under normal condition, a wheel angular velocity at the speed in the forward or backward direction which is obtained in step (d), comparing the wheel angular velocity at the speed in the forward or backward direction with the angular velocity of each wheel obtained in step (a), and operating a device which warns of a pneumatic abnormality of a tyre when the respective differences between the wheel angular velocity at the speed in the forward or backward direction and the angular velocity of each wheel detected in step (a) ranges from 0.05% to 0.60% of the wheel angular velocity from the table.

The method of the present invention preferably includes a step (g) of directly measuring and monitoring the acceleration of the vehicle in the lateral direction, and a step (h) of invalidating the data of angular velocity of each wheel when the absolute value of the acceleration in the lateral direction exceeds 0.06g (g: gravity).

Further, the method of the present invention preferably includes a step (i) of directly measuring and monitoring the acceleration of a vehicle in a forward or backward direction, and a step (j) of invalidating the date for the angular velocity of each wheel when an absolute value of the acceleration in the forward or backward direction exceeds 0.03g.

Moreover, the method of the present invention preferably includes a step (k) of invalidating the data of the angular velocity of each wheel when the brake pedal is pressed; or a step (l) of measuring the throttle opening, differentiating the measured value, and a step (m) of invalidating the date for the angular velocity of each wheel when the differentiated value exceeds 100%/sec.

In accordance with the present invention, there is also provided a device for detecting pneumatic abnormalities of a tyre on a vehicle comprising angular velocity signal producing means for producing signals proportional to the detected angular velocities, acceleration detecting means for detecting accelerations of the vehicle in a forward or backward direction, integrating means for integrating the detected acceleration and obtaining a speed in the forward or backward direction, speed signal producing means for producing a signal proportional to the obtained speed in the forward or backward direction, and arithmetic processing means for arithmetically processing the signals from the angular velocity signal producing means and the speed signal producing means, wherein the arithmetic processing means obtains, from a previously prepared table of wheel angular velocities under normal condition, a wheel angular velocity at the speed in the forward or backward direction which is obtained by the integrating means, compares the wheel angular velocity at the speed in the forward or backward direction with the angular velocity of each wheel obtained in the angular velocity detecting means, and operates a device which warns of pneumatic abnormality of a tyre when the respective differences between the wheel angular velocity at the speed in the forward or backward direction and the angular velocity of each wheel obtained in the angular velocity detecting means range from 0.05% to 0.60% of the wheel angular velocity from the table.

The device of the present invention preferably includes means for directly measuring and monitoring the acceleration of the vehicle in the lateral direction, and means for invalidating the data of angular velocity of each wheel when an absolute value for the acceleration in the lateral direction exceeds 0.06g (g: acceleration of gravity).

Further, the device of the present invention preferably includes means for directly measuring and monitoring the acceleration of the vehicle in the forward or backward direction, and invalidating the date from the angular velocity of each wheel when an absolute value of the acceleration in the forward or backward direction exceeds 0.03g.

Moreover, the device of the present invention preferably includes means for invalidating the data for angular velocity of each wheel when a brake pedal is pressed, or means for measuring the throttle opening and differentiating and monitoring the measured value, and invalidating the data for angular velocity of each wheel when the differentiated value exceed 100%/sec.

The acceleration of a vehicle is preferably measured by a sensor, and the absolute speed of the vehicle is obtained by integrating the acceleration from the time the vehicle starts.

Described herebelow is a method for detecting pneumatic abnormalities of a tyre on a vehicle according to the present invention (hereinafter referred to as the detection method), set out stepwise.

In step (a), the angular velocity of rotation (hereinafter referred to as angular velocity) of each wheel is detected from vehicle speed pulses produced by an ABS by using the angular velocity detecting means such as a pulse counter. In step (b), signals proportional to the angular velocities are produced by using angular velocity signal producing means such as a Digital to Analogue (D/A) converter, and the angular velocity of each wheel is monitored continuously.

In step (c), a voltage proportional to acceleration is monitored by using an acceleration sensor such as a piezo-electric acceleration transducer to obtain the acceleration in the forward or backward direction. The acceleration is transmitted to an A/D converter through a filter and is digitised. Sampling is executed at regular intervals.

In step (d), the sampled, digitised accelerations are integrated from the time the vehicle starts by using integration means such as an integration circuit, so that an absolute speed for the vehicle is obtained. The integration is executed by using, for example, trapezoidal integration. In step (e), a signal proportional to the absolute speed is produced by using speed signal producing means such as a D/A converter, and the absolute speed of the vehicle is monitored continuously.

In step (f), an angular velocity under normal pneumatic pressure at the absolute speed of the vehicle obtained in step (d) is obtained from a previously prepared table and is compared with the angular velocity detected in step (a). The signals from steps (e) and (b) are used at this stage. The device which warns of tyre abnormalities or deflation is operated when the difference between the two angular velocities ranges from 0.05% to 0.60% of the wheel angular velocity in the table. Warning can be performed by using a buzzer or the like which appeal to ears or by using lamps or the like which appear to eyes.

For step (f), a table describing the angular velocities for each tyre at each specific speed under normal pneumatic pressure is required. Such a table can be obtained by driving on a straight course at each specific speed under normal pneumatic pressure. Table 1 shows an example of such a table.

**Table 1**

| | 20 (km/h) | 40 (km/h) | 60 (km/h) | 80 (km/h) | 100 (km/h) | 120 (km/h) |
|---|---|---|---|---|---|---|
| Front left wheel | 8.8940 (rad/sec) | 17.7835 | 26.6692 | 35.5402 | 44.4018 | 53.2213 |
| Front right wheel | 8.9064 | 17.8083 | 26.7064 | 35.5897 | 44.4636 | 53.2955 |
| Rear wheel left | 8.8747 | 17.7437 | 26.6071 | 35.4534 | 44.2885 | 53.0786 |
| Rear right wheel | 8.8634 | 17.7211 | 26.5731 | 35.4083 | 44.2321 | 53.0109 |

Angular velocities of tyres (that is, wheels) change with speeds of vehicles. Accordingly, the angular velocity of each tyre must be obtained at various driving speeds under normal pneumatic pressure and must be prepared in a table.

Also, the angular velocities of tyres change with vehicle weight, turning, braking and tyre wear as well as with pneumatic pressure and the speed of the vehicle. If the device of the present invention further includes means for eliminating the above factors, such as means for judging whether a vehicle is braking or not (refer to Japanese Unexamined Patent Publication No 305011/1988), the accuracy of detection will be improved.

The method and the device of the present invention will now be described in more detail in relation to a specific embodiment, by way of example only.

In this method to eliminate abnormal values, the determination of turning and acceleration or deceleration of a vehicle is performed, not by calculating the angular velocity of each tyre, but by directly measuring the accelerations of the vehicle in the lateral direction and in the forward or backward direction, whereby abnormal values can be surely eliminated.

In step (g), acceleration of a vehicle in the lateral direction is measured by a lateral acceleration sensor mounted on the vehicle attached to a microcomputer or the like. For a lateral acceleration sensor, for example, a piezo-electric acceleration transducer or a strain gauge acceleration transducer or the like can be used. These sensors can directly measure the acceleration of the vehicle in the lateral direction without using information from any tyre such as the angular velocity of each tyre. Hence, the acceleration in the lateral direction can be measured accurately, irrelevant to the status of the tyres.

On the other hand, the angular velocity of each tyre is measured using a rotation pulse generator or the like, monitored continuously by a microcomputer or the like.

In step (h), the data for the angular velocity of each wheel is automatically eliminated by using a microcomputer or the like when the acceleration of the vehicle in the lateral direction exceeds 0.06g and deflation of any tyre is only detected by using the data which are not eliminated. If the acceleration in the lateral direction exceeds 0.06g, the data is not used because a cause other than deflation of the tyre, that is, turning of the vehicle makes differences in angular velocity between the inner wheels and the outer wheels, which would otherwise make the warning device operate wrongly.

Instead of acceleration in the lateral direction it is also preferable that, in step (i), the acceleration of the vehicle in the forward and back word direction is measured by an acceleration sensor mounted on the vehicle which continually monitors by a microcomputer or the like in a step (i). As a forward-backward acceleration sensor, for example, a piezo-electric acceleration transducer or strain gauge acceleration transducer can be used. These sensors can directly measure acceleration of a vehicle in the forward and backward direction without using information from the tyres such as the angular velocity of the tyre. Hence, the acceleration in the forward or backward direction can be measured accurately, irrelevant of the status of the tyres.

Then, in step (j), the data for the angular velocity of each wheel is automatically eliminated by using a microcomputer when the acceleration in the forward or backward direction exceeds 0.03g so that deflation of the tyres is only detected by using the data which are not eliminated. If the acceleration in the forward and backward direction exceeds 0.03g, the data cannot be used because, causes other than deflation of a tyre, that is, tyre slip caused by driving or baking make differences in the angular velocities of the tyres which would give false warnings.

Further, in step (k), it is preferably that the data for the angular velocity of each wheel is automatically eliminated by using a microcomputer when the brake pedal is stepped on. when the braking pedal is stepped on, the data cannot be used because tyre slip caused by braking makes further differences among the angular velocities of the tyre.

Also, as another method, in step (l), the throttle opening is measured by a sensor such as a throttle sensor. The measured value is differentiated by using a differentiating circuit, a microcomputer or the like and is continually monitored. Then, in step (m), if the differentiated value exceeds 100%/sec, the data for the angular velocity of each tyre is automatically eliminated by the microcomputer. When the differentiated value exceeds 100%/sec, the data cannot be used because tyre slip makes differences among the angular velocities of tyres, which makes the warning device operate wrongly.

Apart from using the above ways individually, it is preferably to combine two or three of the above ways among and more preferable to use all the four ways. Thus, abnormal values can be eliminated more accurately than by using the ways individually.

The detection method of the present invention utilises wheel pulses in the ABS so that the reliability of the method is high and the cost of the method is low. Acceleration measured by an acceleration sensor is integrated to obtain the vehicle speed. Deflation of tyres are detected on the basis of the vehicle speed, hence simultaneous deflation of four wheels can be detected.

Though several embodiments of the present invention are described above, it is to be understood that the present invention is not limited only to the above-mentioned and various changes and modifications may be made in the invention without departing from the terms of the claims.

## Claims

1. A method for detecting pneumatic abnormalities of a tyre on a vehicle, the method characterised by the steps of:
(a) detecting the angular velocity of each wheel,
(b) producing signals proportional to the detected angular velocities,
(c) measuring the acceleration of the vehicle in a forward or backward direction,
(d) obtaining a speed in the forward or backward direction by integrating the measured accelerations, (e) producing a signal proportional to the
speed in the forward/backward direction, and
(f) arithmetically processing the signals produced in steps (b) and (e)
wherein step (f) comprises obtaining, from a previously prepared table of wheel angular velocities under the normal tyre inflation condition a wheel angular velocity at the speed in the forward or backward direction which is obtained in step (d), comparing the wheel angular velocity at the speed in the forward and backward direction with the angular velocity of each wheel obtained in step (a), and operating a device which warns of pneumatic abnormalities of a tyre when the respective differences between the wheel angular velocity at the speed in the forward and backward direction and the angular velocity of each wheel detected in step (a) range from 0.05% to 0.60% of the wheel angular velocity in the table.

2. The method of claim 1, characterised in that the method further includes the steps of:
(g) directly measuring and monitoring acceleration in the lateral direction, and
(h) invalidating the data for the angular velocity of each wheel when an absolute value of the acceleration in the lateral direction exceeds 0.06g.

3. The method of claim 1 or 2, characterised in that the method further includes the steps of:
(i) directly measuring and monitoring the acceleration of the vehicle in the forward or backward direction, and
(j) invalidating the data for the angular velocity of each wheel when the absolute value of the acceleration in the forward or backward direction exceeds 0.03g.

4. The method of claim 1, 2 or 3, characterised in that the method further includes the step of:
(k) invalidating the date for the angular velocity of each wheel when a brake pedal is pressed.

5. The method of any of claims 1 to 4, characterised in that the method further includes the steps of:
(l) measuring the throttle opening, differentiating the measured values and monitoring the differentiated value, and
(m) invalidating the data of angular velocity of each wheel when the differentiated value exceeds 100%/sec.

6. A device for detecting pneumatic abnormalities of a tyre on a vehicle comprising angular velocity detecting means for detecting the angular velocity of each wheel, angular velocity signal producing means for producing signals proportional to the detected angular velocities, acceleration detecting means for detecting acceleration of the vehicle in a forward or backward direction, integrating means for integrating the acceleration and obtaining a speed in the forward or backward directions, speed signal producing means for producing a signal proportional to the obtained speed in the forward or backward direction, and arithmetically processing means for arithmetically processing the signals from the angular velocity signal producing means and the speed signal producing means wherein the arithmetically processing means obtains, from the previously prepared table of wheel angular velocities in the normal inflated tyre condition, a wheel angular velocity at the speed in the forward or backward direction which is obtained by the integrating means, compares the wheel angular velocity at the speed in the forward or backward direction with the angular velocity of each wheel obtained in the angular velocity detecting means, and operates a device which warns of the pneumatic abnormalities of the tyre when the respective differences between the wheel angular velocity at the speed in the forward and backward direction and the angular velocity of each wheel detected in the angular velocity detecting means range from 0.05% to 0.60% of wheel angular velocity in the table.

7. The device of claim 6, characterised in that the device further includes means for directly measuring and monitoring the acceleration of the vehicle in a lateral direction, and means for invalidating the data for the angular velocity of each wheel when the absolute value of the acceleration in the lateral direction exceeds 0.06g.

8. The device of claim 6 or 7, characterised in that the device further includes means for directly measuring and monitoring acceleration of the vehicle in the forward or backward direction, and means for invalidating the data for the angular velocity of each wheel when an absolute value of the acceleration in the forward or backward direction exceeds 0.03g.

9. The device of claim 6, 7 or 8, characterised in that the device further includes means for invalidating the data for the angular velocity of each wheel when the brake pedal is pressed.

10. The device of claim 6, 7, 8 or 9, characterised in that the device further includes means for measuring throttle opening, differentiating the measured value, and monitoring the differentiated value, and means for invalidating the data for the angular velocity of each wheel when the differentiated value exceeds 100%/sec.

## Patentansprüche

1. Ein Verfahren zum Detektieren von Luftanomalien eines Reifens auf einem Fahrzeug, wobei das Verfahren durch die Schritte
gekennzeichnet ist, daß
(a) die Winkelgeschwindigkeit jedes Rades detektiert wird,
(b) Signale produziert werden, die proportional zu den detektierten Winkelgeschwindigkeiten sind,
(c) die Beschleunigung des Fahrzeuges in einer Richtung nach vorne oder nach hinten gemessen wird,
(d) die Geschwindigkeit in der Richtung nach vorne oder nach hinten erhalten wird, indem die gemessenen Beschleunigungen integriert werden,
(e) ein Signal produziert wird, das proportional zu der Geschwindigkeit in der Richtung nach vorne / nach hinten ist, und
(f) die Signale, die in den Schritten (b) und (e) produziert werden, arithmetisch verarbeitet werden,
worin der Schritt (f) umfaßt, daß aus einer vorher vorbereiteten Radwinkelgeschwindigkeitstabelle unter dem normalen Reifenaufpumpzustand eine Radwinkelgeschwindigkeit bei der in Schritt (d) erhaltenen Geschwindigkeit in der Richtung nach vorne oder nach hinten erhalten wird, die Radwinkelgeschwindigkeit bei der Geschwindigkeit in der Richtung nach vorne und nach hinten mit der in Schritt (a) erhaltenen Winkelgeschwindigkeit jedes Rades verglichen wird, und
eine Vorrichtung betätigt wird, welche vor Luftanomalien eines Reifens warnt, wenn die jeweiligen Differenzen zwischen der Radwinkelgeschwindigkeit bei der Geschwindigkeit in der Richtung nach vorne und nach hinten und der in Schritt (a) detektierten Winkelgeschwindigkeit jedes Rades zwischen 0,05 % bis 0,60 % der Radwinkelgeschwindigkeit in der Tabelle liegen.

2. Das Verfahren nach Anspruch 1,
dadurch gekennzeichnet,
daß das Verfahren weiter die Schritte umfaßt, daß
(g) die Beschleunigung in der seitlichen Richtung direkt gemessen und überwacht wird, und
(h) die Daten für die Winkelgeschwindigkeit jedes Rades ungültig gemacht werden, wenn ein Absolutwert der Beschleunigung in der seitlichen Richtung 0,06 g überschreitet.

3. Das Verfahren nach Anspruch 1 oder 2,
dadurch gekennzeichnet,
daß das Verfahren weiter die Schritte umfaßt, daß
(i) die Beschleunigung des Fahrzeuges in der Richtung nach vorne oder nach hinten direkt gemessen und überwacht wird, und
(j) die Daten für die Winkelgeschwindigkeit jedes Rades ungültig gemacht werden, wenn der Absolutwert der Beschleunigung in der Richtung nach vorne oder nach hinten 0,03 g überschreitet.

4. Das Verfahren nach Anspruch 1, 2 oder 3,
dadurch gekennzeichnet,
daß das Verfahren weiter den Schritt umfaßt, daß
(k) die Daten für die Winkelgeschwindigkeit jedes Rades ungültig gemacht werden, wenn ein Bremspedal gedrückt wird.

5. Das Verfahren nach einem der Ansprüche 1 bis 4,
dadurch gekennzeichnet,
daß das Verfahren weiter die Schritte umfaßt, daß
(l) die Drosselklappenöffnung gemessen wird, die gemessenen Werte differenziert werden und der differenzierte Wert überwacht wird, und
(m) die Daten der Winkelgeschwindigkeit jedes Rades ungültig gemacht werden, wenn der differenzierte Wert 100 %/sec überschreitet.

6. Eine Vorrichtung zum Detektieren von Luftanomalien eines Reifens auf einem Fahrzeug mit Winkelgeschwindigkeitsdetektionsmitteln zum Detektieren der Winkelgeschwindigkeit jedes Rades, Winkelgeschwindigkeitssignalproduktionsmitteln zum Produzieren von Signalen, die proportional zu den detektierten Winkelgeschwindigkeiten sind, Beschleunigungsdetektionsmitteln zum Detektieren der Beschleunigung des Fahrzeuges in einer Richtung nach vorne oder nach hinten, Integrationsmitteln zum Integrieren der Beschleunigung und zum Erhalten einer Geschwindigkeit in den Richtungen nach vorne oder nach hinten, Geschwindigkeitssignalproduktionsmitteln zum Produzieren eines Signals, das proportional zu der erhaltenen Geschwindigkeit in der Richtung nach vorne oder nach hinten ist, und arithmetischen Verarbeitungsmitteln zum arithmetischen Verarbeiten der Signale von den Winkelgeschwindigkeitssignalproduktionsmitteln und den Geschwindigkeitssignalproduktionsmitteln, worin das arithmetische Verarbeitungsmittel aus der vorher vorbereiteten Radwinkelgeschwindigkeitstabelle in dem normal aufgepumpten Reifenzustand eine Radwinkelgeschwindigkeit bei der Geschwindigkeit in der Richtung nach vorne oder nach hinten, welche von den Integrationsmitteln erhalten wird, erhält, die Radwinkelgeschwindigkeit bei der Geschwindigkeit in der Richtung nach vorne oder nach hinten mit der Winkelgeschwindigkeit jedes Rades, die in den Winkelgeschwindigkeitsdetektionsmitteln erhalten wird, vergleicht, und eine Vorrichtung betätigt, welche vor den Luftanomalien des Reifens warnt, wenn die jeweiligen Differenzen zwischen der Radwinkelgeschwindigkeit bei der Geschwindigkeit in der Richtung nach vorne und nach hinten und der Winkelgeschwindigkeit jedes Rades, die in den Winkelgeschwindigkeitsdetektionsmitteln detektiert wird, zwischen 0,05 % bis 0,60 % der Radwinkelgeschwindigkeit in der Tabelle liegen.

7. Die Vorrichtung nach Anspruch 6,
dadurch gekennzeichnet, daß die Vorrichtung weiter Mittel zum direkten Messen und Überwachen der Beschleunigung des Fahrzeuges in einer seitlichen Richtung und Mittel zum Ungültigmachen der Daten für die Winkelgeschwindigkeit jedes Rades, wenn der Absolutwert der Beschleunigung in der seitlichen Richtung 0,06 g überschreitet, umfaßt.

8. Die Vorrichtung nach Anspruch 6 oder 7,
dadurch gekennzeichnet, daß die Vorrichtung weiter Mittel zum direkten Messen und Überwachen der Beschleunigung des Fahrzeuges in der Richtung nach vorne oder nach hinten und Mittel zum Ungültigmachen der Daten für die Winkelgeschwindigkeit jedes Rades, wenn ein Absolutwert der Beschleunigung in der Richtung nach vorne oder nach hinten 0,03 g überschreitet, umfaßt.

9. Die Vorrichtung nach Anspruch 6, 7 oder 8,
dadurch gekennzeichnet, daß die Vorrichtung weiter Mittel zum Ungültigmachen der Daten für die Winkelgeschwindigkeit jedes Rades umfaßt, wenn das Bremspedal gedrückt wird.

10. Die Vorrichtung nach Anspruch 6, 7, 8 oder 9,
dadurch gekennzeichnet, daß die Vorrichtung weiter Mittel zum Messen der Drosselklappenöffnung, zum Differenzieren des gemessenen Wertes und zum Überwachen des differenzierten Wertes und Mittel zum Ungültigmachen der Daten für die Winkelgeschwindigkeit jedes Rades, wenn der differenzierte Wert 100 %/sec überschreitet, umfaßt.

## Revendications

1. Procédé de détection d'anomalies pneumatiques d'un pneumatique monté sur un véhicule, le procédé étant caractérisé par les étapes suivantes :
(a) la détection de la vitesse angulaire de chaque roue,
(b) la production de signaux proportionnels aux vitesses angulaires détectées,
(c) la mesure de l'accélération du véhicule dans la direction avant-arrière,
(d) l'obtention d'une vitesse dans la direction avant-arrière par intégration des accélérations mesurées,
(e) la production d'un signal proportionnel à la vitesse dans la direction avant-arrière, et
(f) le traitement arithmétique des signaux produits dans les étapes (b) et (e),
dans lequel l'étape (f) comprend l'obtention, à partir d'une table préalablement préparée des vitesses angulaires de roue dans la condition de gonflage normal des pneumatiques, d'une vitesse angulaire de roue pour la vitesse vers l'avant ou vers l'arrière qui est obtenue dans l'étape (d), la comparaison de la vitesse angulaire de roue pour la vitesse dans la direction avant-arrière à la vitesse angulaire de chaque roue obtenue dans l'étape (a), et la commande d'un dispositif qui avertit d'anomalies pneumatiques d'un pneumatique lorsque les différences respectives entre la vitesse angulaire de roue pour la vitesse dans la direction avant-arrière et la vitesse angulaire de chaque roue détectée dans l'étape (a) sont comprises entre 0,05 % et 0,60 % de la vitesse angulaire de roue de la table.

2. Procédé selon la revendication 1, caractérisé en ce qu'il comporte en outre les étapes suivantes :
(g) la mesure directe et le contrôle de l'accélération en direction latérale, et
(h) l'invalidation des données de vitesse angulaire de chaque roue lorsque la valeur absolue de l'accélération en direction latérale dépasse 0,06 g.

3. Procédé selon la revendication 1 ou 2, caractérisé en ce qu'il comporte les étapes suivantes :
(i) la mesure directe et le contrôle de l'accélération du véhicule dans la direction avant-arrière, et
(j) l'invalidation des données de vitesse angulaire de chaque roue lorsque la valeur absolue de l'accélération dans la direction avant-arrière dépasse 0,03 g.

4. Procédé selon la revendication 1, 2 ou 3, caractérisé en ce qu'il comprend en outre l'étape suivante :
(k) l'invalidation des données de vitesse angulaire de chaque roue lorsqu'une pédale de frein est enfoncée.

5. Procédé selon l'une quelconque des revendications 1 à 4, caractérisé en ce qu'il comporte en outre les étapes suivantes :
(l) la mesure de l'ouverture du papillon des gaz, la différentiation des valeurs mesurées et le contrôle de la valeur différentiée, et
(m) l'invalidation des données de vitesse angulaire de chaque roue lorsque la valeur différentiée dépasse 100 %/s.

6. Appareil de détection d'anomalies pneumatiques d'un pneumatique monté sur un véhicule, comprenant un dispositif de détection de vitesse angulaire de chaque roue, un dispositif producteur de signaux de vitesse angulaire destiné à produire des signaux proportionnels aux vitesses angulaires détectées, un dispositif de détection d'accélération destiné à détecter l'accélération du véhicule dans la direction avant-arrière, un dispositif d'intégration de l'accélération et d'obtention d'une vitesse dans la direction avant-arrière, un dispositif producteur de signaux de vitesse destiné à produire un signal proportionnel à la vitesse obtenue dans la direction avant-arrière, et un dispositif de traitement arithmétique des signaux provenant du dispositif producteur de signaux de vitesse angulaire et du dispositif producteur de signaux de vitesse, dans lequel le dispositif de traitement arithmétique obtient, à partir de la table de vitesses angulaires de roue à l'état de gonflage normal du pneumatique, préparée au préalable, une vitesse angulaire de roue pour la vitesse dans la direction avant-arrière qui est obtenue par le dispositif d'intégration, compare la vitesse angulaire de roue pour la vitesse dans la direction avant-arrière à la vitesse angulaire de chaque roue obtenue dans le dispositif de détection de vitesse angulaire, et commande un dispositif d'avertissement d'anomalies pneumatiques du pneumatique lorsque les différences respectives entre la vitesse angulaire de roue pour la vitesse dans la direction avant-arrière et la vitesse angulaire de chaque roue détectée par le dispositif de détection de vitesse angulaire sont comprises entre 0,05 % et 0,60 % de la vitesse angulaire de roue de la table.

7. Appareil selon la revendication 6, caractérisé en ce qu'il comporte en outre un dispositif de mesure directe et de contrôle de l'accélération du véhicule en direction latérale, et un dispositif destiné à invalider les données de vitesse angulaire de chaque roue lorsque la valeur absolue de l'accélération en direction latérale dépasse 0,06 g.

8. Appareil selon la revendication 6 ou 7, caractérisé en ce qu'il comporte en outre un dispositif de mesure directe et de contrôle de l'accélération du véhicule dans la direction avant-arrière, et un dispositif destiné à invalider les données de vitesse angulaire de chaque roue lorsqu'une valeur absolue de l'accélération dans la direction avant-arrière dépasse 0,03 g.

9. Appareil selon la revendication 6, 7 ou 8, caractérisé en ce qu'il comporte en outre un dispositif destiné à invalider les données de vitesse angulaire de chaque roue lorsque la pédale de frein est enfoncée.

10. Appareil selon la revendication 6, 7, 8 ou 9, caractérisé en ce qu'il comporte en outre un dispositif de mesure de l'ouverture du papillon des gaz, de différentiation de la valeur mesurée et de contrôle de la valeur différentiée, et un dispositif destiné à invalider les données de vitesse angulaire de chaque roue lorsque la valeur différentiée dépasse 100 %/s.
